# EUROPÄISCHE PATENTSCHRIFT

(11) **EP 0 968 541 B1**
(45) Veröffentlichungstag und Bekanntmachung des Hinweises auf die Patenterteilung: **17.10.2001**
(21) Anmeldenummer: 98916927.1
(22) Anmeldetag: 12.03.1998
(51) Int. Cl.: H01M 8/04

(54) **BRENNSTOFFZELLE MIT PULSFÖRMIG VERÄNDERTEM ANODENPOTENTIAL**
FUEL CELL WITH PULSED ANODE POTENTIAL
PILE A COMBUSTIBLE A POTENTIEL ANODIQUE PULSE

(30) Priorität: 15.03.1997 DE 19710819
(43) Veröffentlichungstag der Anmeldung: 05.01.2000
(73) Patentinhaber: MANNESMANN Aktiengesellschaft, 40213 Düsseldorf (DE)
(72) Erfinder: STIMMING, Ulrich, D-81479 München (DE); FRIEDRICH, Kaspar, Andreas, D-81925 München (DE); UNKAUF, Wolfgang, D-65232 Taunusstein (DE)
(74) Vertreter: Meissner, Peter E., Dipl.-Ing.
(86) Internationale Anmeldenummer: EP9801436
(87) Internationale Veröffentlichungsnummer: WO9842038

(56) Entgegenhaltungen:
- EP-A- 0 362 445
- EP-A- 0 692 835
- EP-A- 0 701 294
- FEDKIW P S ET AL: "Pulsed-potential oxidation of methanol" J. ELECTROCHEMICAL SOCIETY, Bd. 135, Nr. 10, 1988, USA, Seiten 2459-2465, XP002069148
- SHING-RU WANG ET AL: "PULSED-POTENTIAL OXIDATION OF METHANOL. II GRAPHITE-SUPPORTED PLATINUM ELECTRODE WITH AND WITHOUT TIN SURFACE MODIFICATION" JOURNAL OF THE ELECTROCHEMICAL SOCIETY, Bd. 139, Nr. 11, 1.November 1992, Seiten 3151-3158, XP000360619
- PATENT ABSTRACTS OF JAPAN vol. 011, no. 351 (E-557), 17.November 1987 & JP 62 128458 A (SHIN KOBE ELECTRIC MACH CO LTD), 10.Juni 1987,

## Beschreibung

Die Erfindung betrifft eine Brennstoffzelle.

Eine Brennstoffzelle weist eine Kathode, einen Elektrolyten sowie eine Anode auf. Der Kathode wird ein Oxidationsmittel, z. B. Luft und der Anode wird ein Brennstoff, z. B. Wasserstoff zugeführt.

Es gibt Brennstoffzellen, deren Elektrolyt aus einer protonenleitenden Membran bestehen. Die Betriebstemperatur solcher Brennstoffzellen betragen bis zu 130° C. An der Anode bilden sich in Anwesenheit des Brennstoffs mittels eines Katalysators Wasserstoffionen. Die Wasserstoffionen passieren den Elektrolyten und verbinden sich auf der Kathodenseite mit dem durch Reduktion von Sauerstoff stammenden Sauerstoffionen zu Wasser. Elektronen werden dabei freigesetzt und so elektrische Energie erzeugt.

Beim Betrieb von Brennstoffzellen, die z. B. Edelmetallkatalysatoren wie Pt als aktive Komponente der Elektroden beinhalten, führen schon sehr geringe Konzentrationen von Kohlenmonoxid im Brennstoff (< 50 ppm) zu einer Leistungserniedrigung der Zelle, weil aktive Katalysatorplätze mit adsorbiertem Kohlenmonoxid belegt und blockiert werden. Dieses Problem tritt besonders stark bei Brennstoffzellen auf, die einen polymeren Festelektrolyten besitzen.

Als Energieträger für Brennstoffzellen mit polymeren Festelektrolyten wird häufig Methanol vorgesehen, welches in einer Reformierungsreaktion mit Wasser in ein wasserstoffreiches Synthesegas umgewandelt wird. Dieses Synthesegas beinhaltet etwa 1% Kohlenmonoxid. Der relativ hohe Anteil an CO im Synthesegas führt zu einer drastischen Desaktivierung des Elektrokatalysators der Anode der Brennstoffrelle und erniedrigt die Leistung der Brennstoffrelle.

Die Desaktivierung der Katalysatoren tritt ebenfalls bei Verwandung eines Brenngases auf, welches durch Reformierung von Alkoholen, Kohlenwasserstoffen sowie Gemischen von Kohlenwasserstoffen hergestellt wird. Die Reformierung des Energieträgers kann extern oder intern erfolgen wie in der Übersichtsveröffentlichung über Brennstoffrellentschnologie von U. Stimming, VDI Berichte Nr. 1174, (1995) beschrieben. Es ist weiterhin bekannt, daß eine Leistungserniedrigung von Brennstoffzellen durch Desaktivierung der Anodenkatalysatoren auch bei der direkten Methanolumsetzung an der Anode der Brennstoffzelle durch Entstehung von CO auftritt.

Es ist bekannt, zur Vermeidung der vorgenanntun Desaktivierung von Katalysatoren den Co-Gehalt der Brennstoffe unter 100 ppm durch Gasreinigung zu erniedrigen. Die Nachreinigung ist jedoch aufwendig und somit kostenträchtig.

Es ist ferner bekannt, Anodenkatalysatoren mit verbesserter CO-Resistenz wie z. B. Pt-Ru-Legierungen zu entwickeln. Derartige Katalysatoren sind jedoch ebonfalls sehr teuer. Auch lassen sich Adsorptionserscheinongen und damit verbundene Leistungseinbußen nur unbefriedigend vermindern.

Aus der Veröffentlichung von S. Gottesfeld und J. Pafford, J. Eletrochem. Soc. 135 (1988) 2651 ist bekannt, durch Zugabe von geringen Sauerstoff- oder Luftkonzentrationen zum Brennstoff Desaktivierungen aufgrund von adsorbierten Kohlenmonoxid zu vermeiden. Nachteilhaft können bei dieser Lösung zündfähige Gemische auftreten.

Weiterhin sind in der Literatur verfahren beschrieben, in denen Pulse angewandt werden. P.S.Fedkiw et al. (J.Electrochem.Soc. 135 (1988) 2459ff) und S.-R.Wand and P.S.Fedwik (J.Electrochem.Soc. 139 (1992) 3151ff) zeigen, daß durch Aufprägen eines anodischen Pulses auf die Anode Verunreinigungen, die durch Methanoloxidation entstanden sind, entfernt werden können. Außerdem wird in EP 0701294Al ein Verfahren vorgestellt, bei dem die Anwendung eines Pulses auf die elektrochemische Zelle erfolgt. Allerdings werden in allen drei Dokumenten ausschließlich Verfahren beschrieben, bei denen eine Umkehr der Polarität der Zelle erfolgt, was zu zerstörerischen Einflüssen auf die Zelle oder zumindest zur erheblichen Verringerung der Lebensdauer der Zelle führt.

Aufgabe der Erfindung ist die Schatfung einer Brennstoffzelle, bei der preiswert und sicher Leistungseinbußen aufgrund von am Anodenkatalysator adsorbierten Verunreinigungen vermieden werden können.

Die Aufgabe wird durch eine Vorrichtung mit den Merkmalen des Hauptanspruchs gelöst.

Es sind Mittel vorgesehen, die der Anode einer Brennstoffzelle einen positiven Spannungspuls aufprägen. Durch die Aufprägung wird eine pulsförmige Änderung des Anodenpotentials bewirkt.

Die Verbesserung der Leistung wird durch Oxidation des am Katalysator adsorbierten Kohlenmonoxids mittels der pulsförmigen Änderung des Anodenpotentials erreicht. Die Größe der Spannung des Spannungspuls ist während des Betriebes folglich so zu wählen, daß am Anodenkatalysator adsorbiertes Kohlenmonoxid oxidiert wird.

Zur Herbeiführung eines geeigneten positiven Spannungspulses sind z. B. Mittel vorgesehen, die einen vorübergehenden Kurzschluß zwischen Anode und Kathode erzeugen. Alternativ sind Mittel vorgesehen, die eine pulsförmige Einspeisung externer elektrischer Energie bewirken, die der Anode zugeführt wird. In beiden Fällen entstehen kurze Strom- bzw. Spannungspulse, die der Anode anspruchsgemäß aufgeprägt werden. Die Pulsform kann grundsätzlich beliebig sein. Die zuerst geschilderte Variante mit dem Kurzschluß weist gegenüber der Einspeisung externer Energie den Vorteil auf, daß eine externe Energiequelle eingespart werden kann.

Zur pulsförmigen Änderung des Anodenpotentials wird z. B. eine Steuereinrichtung für einen geeigneten, schnellen Transistorschalter eingesetzt. Der Transistorschalter schließt entweder die vergiftete Brennstoffzelle für eine definierte Zeit kurz oder verändert das Anodenpotential zu positiven Werten, indem eine über den Schalter anliegende externe Gleichspannungsquelle von ca. 1 V (z.B. eine Batterie) für eine definierte Zeit der Zelle aufgeprägt wird.

Durch die Einkopplung der Strom- oder Spannungspulse werden am Anodenkatalysator adsorbierte Verunreinigungen oxidiert und infolgedessen die Zelle reaktiviert. Da die Reaktivierung erheblich schneller als die Desaktivierung erfolgt, ist eine mittlere Leistungssteigerung bei Brennstoff mit Kohlenmonoxidanteilen die Folge. Dieses gilt insbesondere bei Verwendung von Katalysatoren mit verbesserter CO-Resistenz wie Pt-Ru-Legierungen.

Bevorzugte Zeitdauern der Pulse betragen 10 bis 200 Millisekunden. Die elektrischen Ströme betragen in der Regel einige A/cm² (z. B. bis zu 10 A/cm²).

Wird eine Brennstoffzelle mit konstanter Last betrieben, so sind Wiederholungsraten von 0.01 - 0.5 Hz zu bevorzugen. Bei Lastwechseln ist eine entsprechende Variation der Wiederholungszeiten der Pulse zweckmäßig.

Die Leistungseinbußen einer Brennstoffzelle aufgrund des Betriebes einer elektronischen Vorrichtung zur Erzeugung der Spannungs- bzw. Strompulse, also die Leistungseinbuße aufgrund der Unterbrechung der Energieentnahme während der Zeitdauer eines Pulses sowie die Leistungseinbuße aufgrund der aufgewendeten Energie für den Puls betragen höchstens 1 - 5% der durch die Zelle erzeugten Leistung.

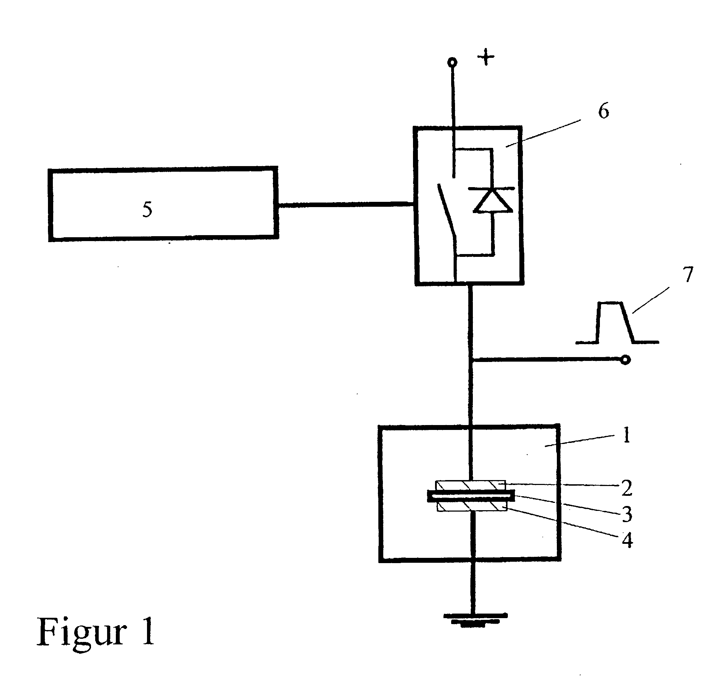

Figur 1 zeigt eine Brennstoffzelle 1, eine Anode 2, eine Elektrolytschicht 3 sowie eine Kathode 4. Ein Signalgenerator 5 ist als Steuereinrichtung vorgesehen. Der Signalgenerator 5 steuert einen schnellen Hochleistungstransistorschalter und zwar einen Transistor MOSFET 6 zur Erzeugung von Spannungspulsen 7. Der Transistor-MOSFET 6 ist mit der Anode 2 elektrisch verbunden, so daß eine pulsförmige Änderung des Anodenpotentials erzeugt wird. Die Änderung ist derart, daß am Anodenkatalysator adsorbiertes Kohlenmonoxid oxidiert werden kann.

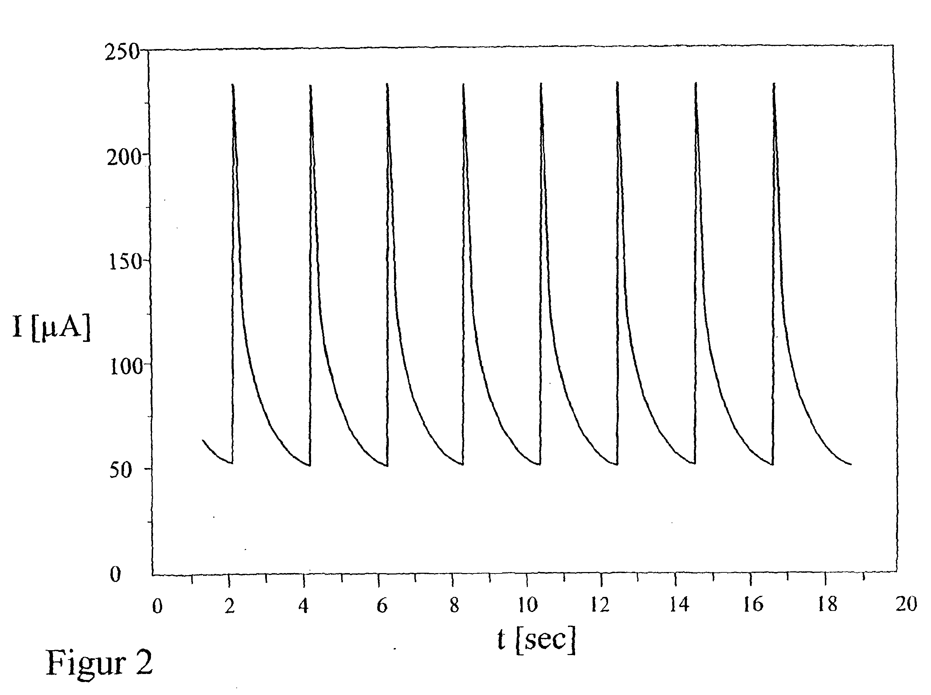

Figur 2 zeigt den gegenüber der Zeit t aufgetragenen elektrischen Stromverlauf I an einer Anode, wie dieser erfindungsgemäß in einer Brennstoffzelle erzeugt werden wird. Eingesetzt wurde ein kohlegeträgerter Pt/Ru-Legierungskatalysator bei einem Potential von 200 mV bei Zufuhr von H₂/5% CO-Gasmischungen. Durch periodische Einkopplung von potentiostatischen Pulsen mit einer Amplitude von 700 mV und einer Pulsdauer von 100 ms mit einer Repetitionsrate von 0,1 Hz kann kontinuierlich ein Strom aufrechterhalten werden. Der eingekoppelte Puls bewirkt sprungförmig ein Potential von 900 mV gegenüber Wasserstoffpotential. Ein solches Sprungpotential reicht aus, um die gewünschte Oxidation des adsorbierten Kohlenmonoxids herbeizuführen. Im vorliegenden Beispiel beträgt der Strom für länger als eine Stunde mindestens 50 µA. Ein derartig kontinuierlicher Oxidationsstrom an der Anode der Brennstoffzelle ermöglicht einen konstanten Betrieb und eine erhebliche Leistungssteigerung der Zelle im Vergleich zum Betrieb ohne Einkopplung von Pulsen.

## Patentansprüche

1. Brennstoffzelle (1) mit einer Anoden-Elektrolyt-Kathoden-Einheit (2, 3, 4), mit einem Anodenkatalysator sowie mit Mitteln (5, 6) zur Aufprägung eines positiven Spannungspulses auf die Anode (2) **dadurch gekennzeichnet, daß** die Spannung der Brennstoffzelle ihr Vorzeichen nicht ändert, höchstens null wird, ΔU(Brennstoffzelle) = U(Kathode) - U(Anode) ≥ 0.

2. Verfahren für die Kohlenmonoxid-Entfernung auf Anodenkatalysatoren von Brennstoffzellen, **dadurch gekennzeichnet, daß** ein oder wiederholte positive Spannungspulse auf die Anode aufgeprägt werden **dadurch gekennzeichnet, daß** die Spannung der Brennstoffzelle ihr Vorzeichen nicht ändert, höchstens null wird, ΔU(Brennstoffzelle) = U(Kathode) - U(Anode) ≥ 0.

3. Verfahren nach Anspruch 2, wobei reformierte Alkohole als Brennstoff verwendet werden.

4. Verfahren nach Anspruch 2, wobei reformierte Kohlenwasserstoffe als Brennstoff verwendet werden.

5. Verfahren nach Anspruch 3, wobei die Reformierung der Alkohole intern in der Brennstoffzelle erfolgt.

6. Verfahren nach Anspruch 4, wobei die Reformierung der Kohlenwasserstoffe intern in der Brennstoffzelle erfolgt.

7. Verfahren nach Anspruch 2, wobei eine direkte Umsetzung von Alkoholen an der Anode erfolgt.

8. Verfahren nach Anspruch 2, wobei eine direkte Umsetzung von Kohlenwasserstoffen an der Anode erfolgt.

## Claims

1. Fuel cell (1) with an anode-electrolyte-cathode unit (2, 3, 4), with an anode catalyst and with means (5, 6) for impressing a positive voltage pulse on the anode (2), **characterised in that** the voltage of the fuel cell does not change its sign, reaching zero at most, ΔU (fuel cell) = U(cathode) - U(anode) ≥ 0.

2. Method for removing carbon monoxide on anode catalysts of fuel cells, **characterised in that** one or repeated positive voltage pulse(s) is/are impressed on the anode, **characterised in that** the voltage of the fuel cell does not change its sign, reaching zero at most, ΔU (fuel cell) = U(cathode) - U(anode) ≥ 0.

3. Method according to Claim 2, wherein reformed alcohols are used as fuel.

4. Method according to Claim 2, wherein reformed hydrocarbons are used as fuel.

5. Method according to Claim 3, wherein the alcohols are reformed internally in the fuel cell.

6. Method according to Claim 4, wherein the hydrocarbons are reformed internally in the fuel cell.

7. Method according to Claim 2, wherein alcohols are converted directly at the anode.

8. Method according to Claim 2, wherein hydrocarbons are converted directly at the anode.

## Revendications

1. Pile à combustible (1), comportant une unité anode-électrolyte-cathode (2, 3, 4), un catalyseur anodique, ainsi que des moyens (5, 6) pour appliquer une impulsion de tension positive sur l'anode (2),
**caractérisée en ce que** la tension de la pile à combustible ne modifie pas son signe, est au plus nulle, ΔU (pile à combustible) = U (cathode) - U (anode) ≥ 0.

2. Procédé pour l'élimination du monoxyde de carbone sur des catalyseurs anodiques de piles à combustible,
**caractérisé en ce qu'**une impulsion de tension ou des impulsions de tension positives répétées sont appliquées sur l'anode, **caractérisé en ce que** la tension de la pile à combustible ne modifie pas son signe, est au plus nulle, ΔU (pile à combustible) = U (cathode) - U (anode) ≥ 0.

3. Procédé selon la revendication 2, des alcools réformés étant utilisés comme combustible.

4. Procédé selon la revendication 2, des hydrocarbures réformés étant utilisés comme combustible.

5. Procédé selon la revendication 3, le reformage des alcools étant effectué de façon interne dans la pile à combustible.

6. Procédé selon la revendication 4, le reformage des hydrocarbures étant effectué de façon interne dans la pile à combustible.

7. Procédé selon la revendication 2, une transformation directe des alcools étant effectuée au niveau de l'anode.

8. Procédé selon la revendication 2, une transformation directe des hydrocarbures étant effectuée au niveau de l'anode.
